# DEMANDE DE BREVET EUROPEEN

(11) **EP 3 147 555 A1**
(43) Date de publication de la demande: **29.03.2017**
(21) Numéro de dépôt: 16188000.0
(22) Date de dépôt: 09.09.2016
(51) Int. Cl.: F21S 8/10, B60Q 1/52, B60Q 1/30, G03H 1/00, G02B 26/08, G03H 1/22, B60Q 1/50, F21Y 101/00, F21Y 115/30, G01S 13/93

(54) **DISPOSITIF DE PROJECTION HOLOGRAPHIQUE D'ELEMENTS DE SIGNALISATION POUR UN VEHICULE AUTOMOBILE**

(30) Priorité: 23.09.2015 FR 1558963
(71) Demandeur: VALEO VISION, 93012 Bobigny Cedex (FR)
(72) Inventeur: DE LAMBERTERIE, Antoine, 75019 PARIS (FR)

(57) **Abrégé**

Un dispositif de projection (1) comporte des moyens d'émission de lumière (2) émettant des rayons déterminés pour éclairer un élément diffractif (6) apte à modifier lesdits rayons pour la formation d'une image sensiblement au foyer (7) dudit élément diffractif.

Selon l'invention, l'élément diffractif (6) est éclairé par des rayons lumineux balayant la surface de l'élément diffractif sous l'effet d'une déviation d'un faisceau émis par une source à forte luminance (10) sur un miroir mobile réfléchissant (12).

Le dispositif de projection prend particulièrement application dans un véhicule automobile, notamment pour projeter des éléments de signalisation de conduite aux véhicules suiveurs.

## Description

La présente invention a trait au domaine de la signalisation des véhicules automobiles, et elle s'applique plus particulièrement aux dispositifs qui visent à donner à des usagers de la route des informations sur les conditions de conduite du véhicule dans lequel ces dispositifs sont appliqués.

Chaque véhicule automobile est équipé réglementairement de moyens d'éclairage et/ou de signalisation, parmi lesquels des moyens de signalisation d'un freinage du véhicule qui prennent la forme de feux de signalisation agencés à l'arrière du véhicule. L'allumage de ces feux de signalisation lorsque le véhicule freine permet d'indiquer aux véhicules suiveurs que le véhicule ralentit, plus ou moins fortement selon l'intensité d'allumage des feux de signalisation, et cela permet de faire comprendre au conducteur du véhicule suiveur qu'il doit à son tour ralentir pour éviter de percuter le véhicule. On comprend que ces feux de signalisation ne présentent un intérêt que si le véhicule suiveur respecte une distance de sécurité réglementaire, c'est-à-dire une distance qui offre au conducteur suffisamment de temps pour recevoir l'information de la signalisation du freinage du véhicule le précédant et procéder à l'action de freinage de son propre véhicule.

Les constructeurs ont ainsi cherché des moyens de faire respecter ces distances de sécurité. Des systèmes de prévention à caméras embarquées sur le véhicule peuvent détecter l'entrée d'un véhicule dans une zone trop proche du véhicule, mais l'information est surtout utilisée pour prévenir le conducteur du véhicule équipé de ces systèmes de prévention, alors qu'il conviendrait également de prévenir le conducteur du véhicule suiveur.

Récemment, on a cherché à projeter des images, selon un principe dit holographique, à l'arrière du véhicule pour que l'information soit particulièrement visible pour le conducteur du véhicule suiveur. Le document FR 2 949 725 divulgue des moyens de génération d'une image holographique pour sa projection en arrière du véhicule, comportant notamment des moyens d'émission d'une onde spécifique sur un élément diffractif spécifique. Afin d'éclairer l'élément diffractif apte à déformer la lumière émise pour créer l'image à projeter, ce document prévoit des moyens d'émission d'un front d'onde plan, à distance suffisante de l'élément diffractif pour ce faire. Un des inconvénients de cette solution est l'encombrement trop important du système de projection, qui impose son emplacement dans le coffre du véhicule, et qui limite de fait l'usage normal de ce coffre pour le stockage de bagages notamment.

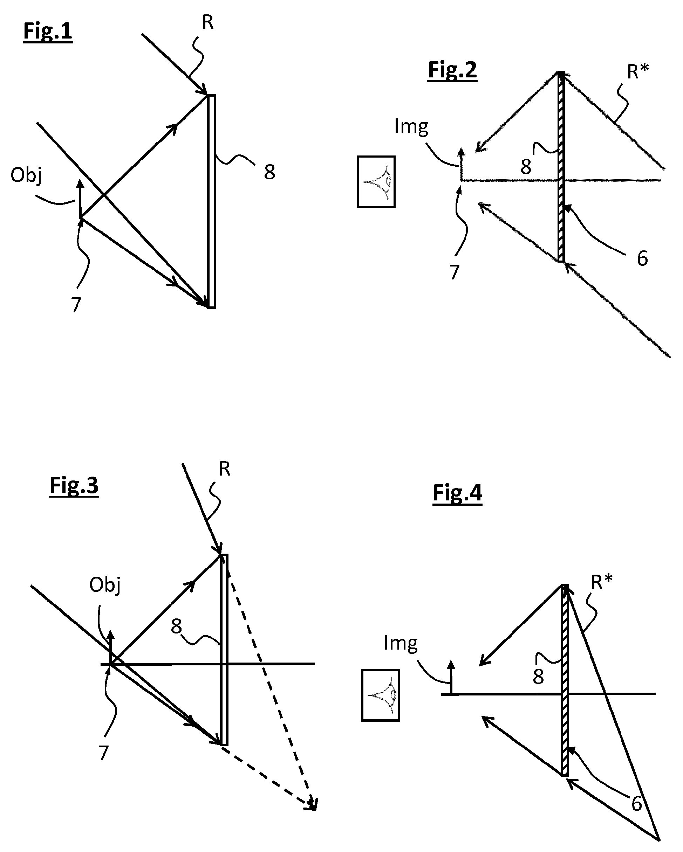

Sur les figures 1 à 4, on a illustré les étapes nécessaires pour permettre la projection d'une image holographique, selon qu'on choisisse d'utiliser des moyens lumineux agencés pour émettre selon un front d'onde sensiblement plan (figures 1 et 2), ou des moyens agencés pour émettre selon un front d'onde sphérique (figures 3 et 4). Dans ces deux cas, on comprend que, dans une première étape d'enregistrement de l'image (figure 1 et 3), on éclaire une plaque photosensible avec une onde lumineuse issue de l'objet modélisé Obj et avec une onde de référence appelée R, l'onde de référence étant illustrée plane sur la figure 1 et sphérique sur la figure 3. Ces deux ondes interférent au niveau de la plaque photosensible et forment ainsi une modulation d'intensité lumineuse. Cette modulation d'intensité ainsi que la caractéristique photosensible de la plaque va permettre d'imprimer sur la plaque une modulation d'épaisseur, ou une modulation d'indice optique, ou une modulation de la transmission d'énergie. Lorsque l'on souhaite plus tard projeter l'image de l'objet, on éclaire la même plaque, qui n'est plus photosensible, avec une onde R* sensiblement identique" à l'onde R à ceci près que les rayons partent dans une direction opposée. La modulation d'épaisseur, d'indice optique ou de transmission va permettre de recréer une image Img identique à l'objet Obj.

On comprend que si l'élément diffractif a été enregistré avec un front d'onde plan, respectivement sphérique, l'onde conjuguée à projeter sur l'élément diffractif doit également présenter un front d'onde plan, respectivement sphérique, lors de la restitution. Dans le document d'art antérieur cité, le front d'onde doit être plan.

L'invention vise à proposer une alternative aux dispositifs de projection connus notamment de l'art antérieur précédemment cité, qui permette de répondre aux inconvénients de ces dispositifs et notamment leur encombrement important.

Dans ce but, l'invention a pour objet un dispositif de projection, notamment holographique, comportant une source de lumière émettant des rayons déterminés pour éclairer un élément diffractif apte à modifier lesdits rayons pour la formation d'un objet sensiblement au foyer dudit élément diffractif. Selon l'invention, l'élément diffractif est éclairé par des rayons lumineux balayant la surface de l'élément diffractif sous l'effet d'une déviation d'un faisceau émis par une source à forte luminance sur des moyens de déviation optique mobiles.

Ainsi, on peut concentrer précisément des rayons lumineux sur l'élément diffractif, sur tout ou partie de cet élément diffractif, et dans un encombrement réduit puisque l'utilisation de moyens de déviation mobile permet de ne pas agencer les éléments optiques en série.

Selon différentes caractéristiques de l'invention, prises seules ou en combinaison :
- la source à forte luminance est une diode laser ;
- le miroir mobile est monté pivotant autour d'au moins un axe de pivotement, ledit pivotement étant piloté par un actionneur ; notamment, ces moyens peuvent consister en un microsystème électromécanique ;
- le miroir mobile est monté pivotant entre deux positions d'extrémité ;
- lesdites positions d'extrémités sont obtenues par des moyens de butée bloquant le pivotement du miroir mobile ;

On pourra prévoir que le miroir mobile est monté en pivotement autour de deux axes distincts, au moins un parmi un premier pivotement autour d'un premier axe et un deuxième pivotement autour d'un deuxième axe étant piloté par un actionneur.

On pourra également prévoir de rendre variable la vitesse de rotation du miroir mobile, et d'en jouer notamment pour répartir de façon variable l'énergie lumineuse sur l'élément diffractif, et cibler plus spécifiquement une zone de cet élément diffractif.

Dans une variante de réalisation, une lentille peut être agencée sur le trajet des rayons lumineux entre le miroir mobile et l'élément diffractif ; de la sorte, on peut générer un front d'onde sensiblement plan pour impacter l'élément diffractif. Ceci permet de s'adapter facilement à telle ou telle méthode d'enregistrement de l'élément diffractif utilisé, et ce dans un encombrement réduit, puisqu'on comprend que si une telle lentille diffractive n'est pas disposée entre le miroir et l'élément diffractif, on génère un front d'onde sensiblement sphérique pour impacter l'élément diffractif.

On pourra prévoir que l'élément diffractif est une plaque holographique à modulation d'amplitude, ou bien à modulation de phase.

L'invention concerne également un véhicule automobile comportant un dispositif de projection holographique tel qu'il vient d'être présenté.

Le véhicule peut comporter en outre des moyens de détection d'un véhicule circulant à proximité et un module de commande apte à recevoir des informations provenant desdits moyens de détection pour l'élaboration d'une instruction de commande de projection dudit dispositif de projection holographique. Cette instruction peut notamment comporter une plage angulaire de pivotement dudit miroir mobile, et/ou une information de vitesse de rotation dudit miroir mobile.

On prévoit d'agencer le dispositif pour que celui-ci puisse projeter une image à l'arrière du véhicule. La conception du dispositif permet pour cela de prévoir de multiples implantations dans le véhicule, aussi bien dans le pavillon que dans le coffre, ou dans un panneau de porte.

Selon une caractéristique de l'invention, le dispositif de projection comporte plusieurs éléments diffractifs agencés pour être éclairés par une unique source et un unique miroir mobile, lesdits éléments diffractifs étant sélectivement éclairés par des rayons émis par la source à forte luminance et déviés selon des plages angulaires déterminées du miroir mobile.

D'autres caractéristiques et avantages de l'invention ressortiront à la lecture de la description qui suit, illustrée par les figures suivantes :
- les figures 1 à 4 illustrent un principe de création d'une image holographique, en présentant les étapes successives d'enregistrement (figure 1) et de restitution (figure 2) d'image par une onde plane de référence, ou les étapes successives d'enregistrement (figure 3) et de restitution (figure 4) d'image par une onde sphérique de référence ;

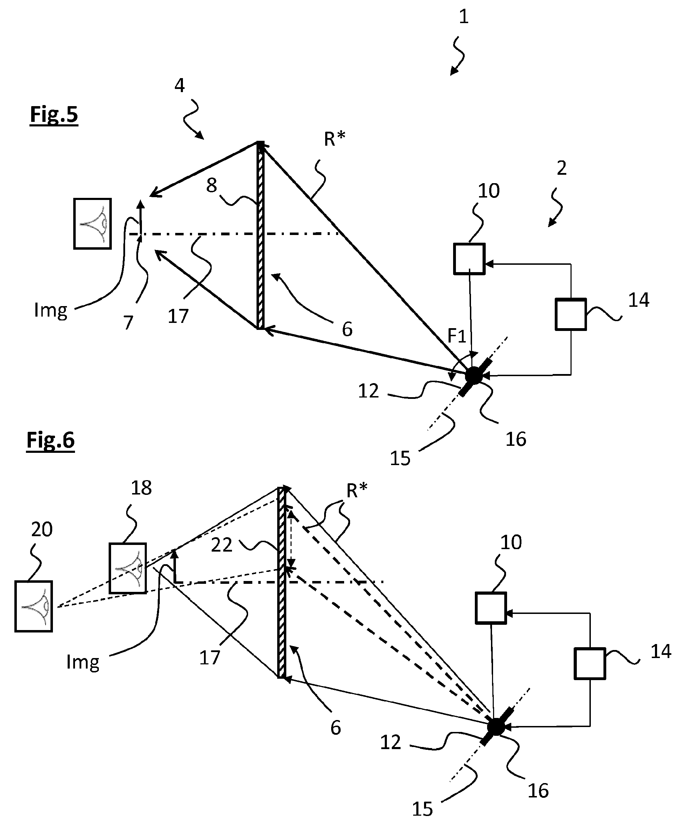

- la figure 5 illustre le dispositif de projection selon un premier mode de réalisation de l'invention, correspondant au principe de restitution illustré sur la figure 4, avec une onde sphérique de référence ;
- la figure 6 illustre une fonction particulière du dispositif de projection de la figure 5 ;

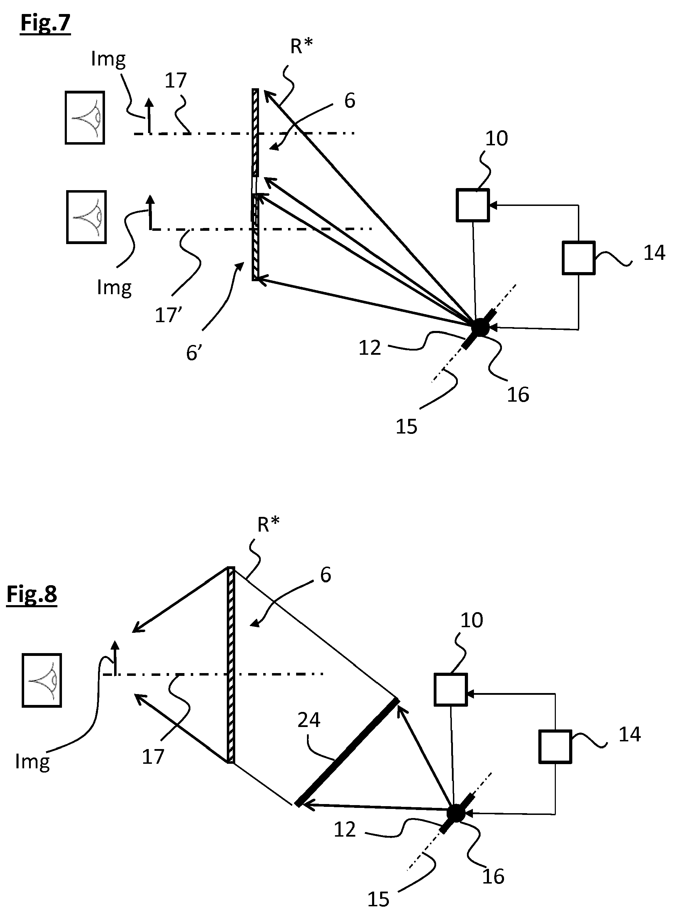

- la figure 7 illustre le dispositif de projection selon un deuxième mode de réalisation de l'invention ;
- la figure 8 illustre le dispositif de projection selon un troisième mode de réalisation de l'invention, correspondant au principe de restitution illustré sur la figure 2, avec une onde plane.

On va décrire différents modes de réalisation d'un dispositif de projection holographique 1 selon l'invention, en se référant aux figures 5 à 8, dans lesquels il sera compris que, pour faciliter la lecture, les directions "haut" et "bas" seront données en référence à l'orientation de la figure 5. De même, un même élément sera référencé de la même manière sur l'ensemble des figures.

On se réfère dans un premier temps au premier mode de réalisation illustré sur la figure 5. Un dispositif de projection holographique 1 comporte des moyens d'émission de lumière 2 et un système optique 4 apte à former une image déterminée en fonction des rayons arrivants sur ce système optique.

Le système optique comporte un élément diffractif 6, agencé dans le dispositif de sorte que le foyer image 7 dudit élément diffractif soit situé à l'extérieur du véhicule, à une distance prédéterminée, et par exemple à 50mm de la carrosserie du véhicule dans lequel est implanté le dispositif.

L'élément diffractif 6 consiste en une plaque 8, créée dans une étape d'enregistrement préalable, conformément aux procédés classiques d'enregistrement d'un Hologramme. Il peut être envisageable selon l'invention d'utiliser plusieurs types d'élément diffractif, selon le mode d'enregistrement utilisé. Tel que cela sera décrit ci-après, le dispositif de projection selon l'invention permet de s'adapter, dans un encombrement minimal et avec des moyens simples à mettre en oeuvre, à l'utilisation imposée de tel ou tel élément diffractif, qu'il soit enregistré avec une onde plane ou une onde sphérique. L'élément diffractif est une plaque de type plaque holographique, qu'elle soit de façon connue à modulation d'amplitude, ou bien à modulation de phase.

Les moyens d'émission de lumière 2 comportent une source de lumière et des moyens de déviation optique mobiles des rayons émis par cette source, et plus particulièrement ils comportent une source à forte luminance 10 et un miroir mobile réfléchissant 12.

La source à forte luminance 10 est avantageusement une diode laser. Elle est fixée sur un élément de structure du véhicule automobile, de manière à être orientée vers le miroir mobile réfléchissant 12. Dans les exemples illustrés, la diode laser est située dans le même plan horizontal que le miroir mobile, en émettant dans le plan horizontal pour cibler le centre de ce miroir. On comprendra que cette orientation arbitraire n'est donnée qu'à titre d'exemple et que la diode pourrait s'étendre au droit du miroir et être orientée vers le bas pour émettre dans un plan vertical.

Le miroir mobile est un microsystème électromécanique, connu sous l'acronyme MEMS pour la traduction anglaise « MicroElectroMechanical Systems ». Un tel microsystème électromécanique consiste en un miroir monté pivotant autour d'au moins un axe, non visible sur les figures, et commandé en rotation par un module de commande 14 associé au dispositif de projection, de manière à pivoter pour une direction donnée entre deux positions extrêmes, à une vitesse de rotation déterminée. La vitesse de rotation est pilotable, et les butées définissant les positions extrêmes également. Tel que cela est visible sur la figure 5 (et par la suite sur les figures 6 à 8), le module de commande 14 est apte également à générer des instructions de commande pour la source à forte luminance 10.

Selon différents agencements, le microsystème électromécanique est monté mobile en rotation autour d'axes distincts, notamment au moins deux, de sorte que le rayon dévié par le microsystème balaye la surface du miroir, le microsystème selon l'invention étant mis en rotation autour d'au moins un axe par un actionneur piloté par un module de commande associé au module lumineux. Par microsystème électromécanique, on entend alors un ensemble optique apte à réfléchir les rayons émis par la source laser, avec soit un dispositif unique qui pivote chacune des directions, soit différents dispositifs associés, parmi lesquels l'un fonctionne en résonance, automatiquement autour uniquement d'un premier axe, et l'autre est piloté par un actionneur en rotation uniquement autour d'un deuxième axe. Dans ce dernier cas, c'est le dispositif qui fonctionne en résonnance qui reçoit préférentiellement les rayons émis par la source laser en premier.

Dans la description qui va suivre, aussi bien pour la description de la structure du module que celle du procédé de contrôle d'émission du faisceau, le microsystème électromécanique consistera en un dispositif unique qui pivote autour de deux axes perpendiculaires. Un premier pivotement a lieu autour d'un premier axe 15, tandis qu'un deuxième pivotement a lieu autour d'un deuxième axe 16, ici perpendiculaire au plan de la feuille. Quelle que soit l'orientation donnée au dispositif de projection dans le véhicule, l'un des deux axes, ici le deuxième 16, est perpendiculaire à l'axe optique 17 de l'élément diffractif, l'autre, ici le premier 15, étant sensiblement dans le même plan, vertical sur la figure 5. On comprend que l'orientation du premier axe 15, ici incliné avec un angle de 45° par rapport à l'horizontal, pourra être modifiée en fonction de la place laissée à disposition pour loger le dispositif, et simultanément à une modification de l'orientation de la diode laser.

Le microsystème électromécanique est agencé pour pivoter autour de deux axes distincts 15,16, avantageusement sensiblement perpendiculaires l'un à l'autre, pour la réalisation d'un balayage complet de l'élément diffractif par le faisceau lumineux dévié par le microsystème électromécanique. Au moins le deuxième axe 16, autour duquel la rotation est pilotée par actionneur, est porté par un élément de structure du véhicule, qui peut être le même élément de structure que celui sur lequel est fixée la source à forte luminance du fait du faible écartement de la source par rapport au miroir mobile, que l'on peut prévoir à titre d'exemple entre 5 et 50mm environ.

Le miroir mobile réfléchissant 12 est agencé autour du deuxième axe 16 de sorte qu'il peut pivoter dans un sens ou dans l'autre, tel qu'illustré sur la figure 5 par la double flèche F1, depuis une position d'origine jusqu'à une position finale, et ce entre deux positions extrêmes. Selon la position dans laquelle le miroir mobile a été immobilisé dans le cycle précédent, les deux positions extrêmes sont disposées angulairement de part et d'autre de la position d'origine, ou bien la position d'origine forme la première des deux positions extrêmes et le miroir peut pivoter entre cette position d'origine et l'autre position extrême. Dans les deux cas, les deux positions d'extrémités peuvent être obtenues, sans que cela soit limitatif de l'invention, par des moyens de butée mécaniques bloquant le pivotement du miroir mobile.

Il est intéressant de noter que les microsystèmes utilisés dans l'invention ne sont pas binaires. On entend par là que l'angle de rotation peut être choisi indifféremment dans la plage angulaire de fonctionnement entre les deux positions extrêmes, par exemple +/- 7° autour de la position d'origine si celle-ci est centrée sur la plage de débattement angulaire, sans être limité à l'une ou l'autre des positions extrêmes, par des instructions de commande de tension ou de courant selon le type de microsystèmes choisis, à commande électrostatique, piézoélectrique ou magnétique par exemple.

On comprend que le module de commande et un actionneur associé permettent de faire pivoter le miroir dans la position souhaitée. Par ailleurs, tel que cela a pu être décrit, la vitesse de rotation du miroir mobile est variable. Ceci est notamment utile dans une application illustrée sur la figure 6.

Sur cette figure 6, on a représenté deux observateurs extérieurs différents, que l'on peut assimiler à deux conducteurs de véhicules suiveurs, et il est notable que ces véhicules ont des positions différentes par rapport au véhicule selon l'invention. Le premier véhicule 18 est situé sensiblement dans l'axe optique 17 de l'élément diffractif formant l'image Img, de sorte que l'image holographique est parfaitement visible quand elle est projetée dans des conditions standards, c'est-à-dire avec un balayage des rayons résultant d'un pivotement du miroir mobile d'une position extrême à l'autre, à vitesse constante. Le deuxième véhicule 20 est décalé par rapport à cet axe optique 17, de sorte que l'image que l'observateur extérieur voit est formée par une portion restreinte 22 de l'élément diffractif 6. Dès lors, il est possible de concentrer les rayons émis sur l'élément diffractif uniquement sur cette portion restreinte, ou plus régulièrement sur cette portion restreinte 22 que sur le reste de l'élément diffractif. Dans le premier cas, lorsque l'on souhaite n'illuminer que la portion restreinte 22, on peut prévoir de régler les butées de pivotement de l'axe du miroir mobile pour que les positions d'origine et finale du miroir correspondent à une déviation de rayon sur l'un des bords de la portion restreinte. Si les butées mécaniques sont fixes, et que le pivotement du miroir se fait uniquement de butée à butée, le module de commande peut donner instruction de commande selon laquelle la vitesse de rotation de l'axe et du miroir est variable, pour être lente dans la plage angulaire correspondant à l'éclairage de la portion restreinte et pour être rapide lorsque l'on éclaire la zone de l'élément diffractif extérieure à cette zone restreinte.

On comprend que les moyens de détection peuvent également détecter des véhicules de différentes hauteurs, et ajuster la hauteur de l'image projetée.

Sur la figure 7, on a illustré un deuxième mode de réalisation, dans lequel le dispositif de projection comporte plusieurs éléments diffractifs 6,6' agencés pour être éclairés par une unique source 10 et un unique miroir mobile 12, lesdits éléments diffractifs étant sélectivement éclairés par des rayons émis par la source à forte luminance et déviés selon des plages angulaires déterminées du miroir mobile. Chaque élément diffractif 6,6' génère sur son axe optique 17,17' ainsi une image Img,Img' qui lui est propre. On a illustré sur la figure 7 un cas d'application d'un tel mode de réalisation dans lequel on projette une image spécifique à des conducteurs de véhicules situés dans différentes zones de la scène de route. On comprendra que l'invention permet de projeter des images pouvant être différentes les unes des autres et placées à différentes hauteurs, profondeurs, et pas nécessairement dans un plan horizontal qui passe par l'élément diffractif.

Sur la figure 8, on a illustré une variante de réalisation dans laquelle le système optique 4 comporte une lentille 24 en plus de l'élément diffractif 6, la lentille pouvant également être diffractive. La lentille est disposée sur le trajet des rayons lumineux entre le miroir mobile 12 et l'élément diffractif 6. Plus particulièrement, la lentille est disposée de sorte que son foyer est sensiblement au voisinage du centre du miroir mobile. Ainsi, l'onde sphérique générée en sortie du miroir par son pivotement est transformée en une onde plane. Contrairement à ce qui a pu être décrit précédemment, l'onde des rayons lumineux rencontrant l'élément diffractif est une onde plane au lieu d'être une onde sphérique. On peut ainsi proposer un dispositif qui s'adapte facilement pour la restitution d'une image, qu'elle soit enregistrée avec une onde sphérique (on utilise dans ce cas un dispositif selon l'une des figures 2 ou 3) ou bien qu'elle soit enregistrée avec une onde plane (on utilise dans ce cas un dispositif selon la figure 4).

On comprend que d'autres variantes pourraient être réalisées pour la conception de système optique sans sortir du contexte de l'invention, dès lors que les rayons déviés par les microsystèmes électromécaniques viennent balayer l'élément diffractif.

Tel que cela a pu être précisé précédemment, le module comporte en outre des moyens de détection sur la scène de route d'un véhicule à prévenir d'une situation de conduite particulière, des moyens d'analyse de toute information transmise par ces moyens de détection, ainsi que des moyens de commande de la source lumineuse et des microsystèmes électromécaniques en fonction d'une instruction de commande déterminée par lesdits moyens d'analyse.

Dans une application préférée de l'invention, le dispositif est apte à projeter une image à l'arrière du véhicule. Pour ce faire, le dispositif peut être logé dans le coffre du véhicule, ou bien être logé dans le pavillon du véhicule, ou dans des éléments de carrosserie latéraux. La présence d'un miroir pivotant dans ce dispositif permet de s'adapter à chacune de ces positions pour projeter malgré tout l'image vers l'arrière du véhicule avec tous les avantages précités.

Un dispositif de projection tel qu'il vient d'être décrit permet la mise en oeuvre d'un procédé de projection d'une image holographique, et notamment dans l'application à la projection d'images à l'arrière d'un véhicule automobile pour prévenir d'une situation de conduite les véhicules suiveurs. Bien sûr, il sera compris que d'autres applications pourraient être utilisées, sans les mêmes objectifs sécuritaires, mais avec par exemple des objectifs publicitaires.

Dans un tel procédé, on réalise dans un premier temps l'émission de rayons lumineux par la source lumineuse. Dans le cas d'une application sécuritaire, où l'on souhaite par exemple projeter une image de danger lorsqu'un véhicule suiveur est détecté trop proche, on procède à un contrôle visuel de la scène de route derrière le véhicule de façon cyclique, jusqu'à ce que les moyens de détection détectent un véhicule dont la distance avec l'arrière du véhicule selon l'invention est inférieure à un seuil déterminé. Cette détection peut s'accompagner d'une information de position du véhicule suiveur par rapport à l'axe de circulation du véhicule selon l'invention. Le module de commande reçoit une information relative à la détection d'un ou plusieurs véhicules suiveurs, et il en génère une instruction de commande de la source lumineuse et une instruction de commande du miroir mobile associé.

L'émission de rayons lumineux est contrôlée par cette instruction de commande, aussi bien par rapport à l'intensité des rayons émis que par rapport à la durée d'émission. Les rayons sont dirigés vers les microsystèmes électromécaniques formés d'au moins un miroir mobile qui sont simultanément actionnés par instruction du module de commande, et qui sont contrôlés aussi bien par rapport à la plage angulaire de débattement que par rapport à la vitesse de rotation. Le rayon dévié par le miroir vient impacter l'élément diffractif, qui réémet le rayon à son foyer image, prévu pour être sensiblement en retrait du véhicule. On comprend que la source laser émet un faisceau ponctuel en un point déterminé du système microélectronique. La surface réfléchissante de ce système dévie le faisceau sur l'élément diffractif, en un point d'impact précis. On comprend que si l'on commande le déplacement du microsystème électromécanique, on réalise le déplacement du point d'impact sur l'élément diffractif. Par un déplacement rapide du microsystème, on réalise un balayage de points sur l'élément diffractif et l'on peut alors former une image virtuelle projetée sur l'axe optique correspondant à l'image objet qui avait servi à l'enregistrement de l'élément diffractif. La vitesse de balayage du miroir et le balayage cyclique permettent d'illuminer en un temps infime chacun des points de la portion de l'élément diffractif à éclairer, ce qui donne pour l'observateur l'impression d'une image fixe.

Telle qu'elle vient d'être décrite, l'invention permet d'obtenir une image holographique avec un dispositif de restitution qui est particulièrement compact, et donc propice à son application dans un véhicule automobile, et de fait dans plusieurs endroits possibles de ce véhicule.

Il ressort en outre de ce qui précède que l'invention peut permettre d'une part la projection optimisée de cette image holographique, afin que l'observateur à qui est adressée l'image puisse la voir le plus nettement possible, et d'autre part la projection d'une pluralité d'images holographiques avec un nombre limité de moyens, simples à mettre en oeuvre et d'un encombrement réduit.

Il est bien sûr à noter que l'invention ne saurait se réduire aux moyens et configurations décrits et illustrés, mais qu'elle s'applique également à tous moyens ou configurations équivalents et à toute combinaison de tels moyens, dès lors que l'on associe une source de forte luminance à un moyen de déviation optique mobile de sorte que le faisceau de rayons dévié vient balayer au moins une zone d'un élément diffractif propre à générer une image déterminée. En particulier, le type et le nombre choisi d'élément(s) diffractif(s) sont, dans la description qui précède, donnés à titre d'exemples.

## Revendications

1. Dispositif de projection comportant des moyens d'émission de lumière (2) émettant des rayons déterminés pour éclairer un élément diffractif (6) apte à modifier lesdits rayons pour la formation d'une image sensiblement au foyer (7) dudit élément diffractif, **caractérisé en ce que** l'élément diffractif est éclairé par des rayons lumineux balayant la surface de l'élément diffractif sous l'effet d'une déviation d'un faisceau émis par une source à forte luminance (10) sur un miroir mobile réfléchissant (12).

2. Dispositif selon la revendication 1, **caractérisé en ce que** la source à forte luminance (10) est une diode laser.

3. Dispositif selon la revendication 1 ou 2, **caractérisé en ce que** le miroir mobile (12) est un microsystème électromécanique.

4. Dispositif selon l'une des revendications précédentes, **caractérisé en ce que** le miroir mobile (12) est monté pivotant autour d'au moins un axe de pivotement (15, 16), ledit pivotement étant piloté par un actionneur.

5. Dispositif selon la revendication précédente, **caractérisé en ce que** le miroir mobile (12) est monté pivotant entre deux positions d'extrémité.

6. Dispositif selon la revendication précédente, **caractérisé en ce que** lesdites positions d'extrémités sont obtenues par des moyens de butée bloquant le pivotement du miroir mobile (12).

7. Dispositif selon l'une des revendications 4 à 6, **caractérisé en ce que** le miroir mobile (12) est monté en pivotement autour d'au moins deux axes distincts parmi lesquels au moins un pivotement est piloté par un actionneur.

8. Dispositif selon l'une des revendications précédentes, **caractérisé en ce que** la vitesse de rotation du miroir mobile (12) est variable.

9. Dispositif selon l'une des revendications précédentes, **caractérisé en ce qu'**une lentille (24) est agencée sur le trajet des rayons lumineux entre le miroir mobile (12) et l'élément diffractif (6).

10. Dispositif selon l'une des revendications précédentes, **caractérisé en ce qu'**il comporte plusieurs éléments diffractifs (6, 6') agencés pour être éclairés par une unique source (10) et un unique miroir mobile (12), lesdits éléments diffractifs étant sélectivement éclairés par des rayons émis par la source à forte luminance et déviés selon des plages angulaires déterminées du miroir mobile.

11. Véhicule automobile comportant un dispositif de projection (1) selon l'une des revendications précédentes.

12. Véhicule selon la revendication précédente, **caractérisé en ce qu'**il comporte en outre des moyens de détection d'un véhicule circulant à proximité et un module de commande (14) apte à recevoir des informations provenant desdits moyens de détection pour l'élaboration d'une instruction de commande de projection dudit dispositif de projection.

13. Véhicule selon l'une des revendications 11 ou 12, **caractérisé en ce que** ladite instruction comporte une plage angulaire de pivotement dudit miroir mobile, et/ou une information de vitesse de rotation dudit miroir mobile.

14. Véhicule selon l'une des revendications 11 à 13, **caractérisé en ce que** ledit dispositif est apte à projeter une image à l'arrière du véhicule.

15. Véhicule selon la revendication précédente, **caractérisé en ce que** ledit dispositif est logé dans le pavillon du véhicule.
